(19) Europäisches Patentamt
European Patent Office
Office européen des brevets

(11) **EP 0 832 373 B1**

(12) **EUROPÄISCHE PATENTSCHRIFT**

(45) Veröffentlichungstag und Bekanntmachung des Hinweises auf die Patenterteilung:
**27.01.1999 Patentblatt 1999/04**

(21) Anmeldenummer: **96915964.9**

(22) Anmeldetag: **04.06.1996**

(51) Int Cl.⁶: **F16F 1/42**, F16F 1/373, B61F 5/12

(86) Internationale Anmeldenummer:
**PCT/DE96/00974**

(87) Internationale Veröffentlichungsnummer:
**WO 96/41971 (27.12.1996 Gazette 1996/56)**

(54) **ANSCHLAGPUFFER, INSBESONDERE QUERPUFFER**

STOP BUFFER, ESPECIALLY TRANSVERSE BUFFER

BUTEE ELASTIQUE, NOTAMMENT BUTEE TRANSVERSALE

(84) Benannte Vertragsstaaten:
**AT BE CH DE DK ES FI FR GB GR IE IT LI LU NL PT SE**

(30) Priorität: **12.06.1995 DE 19520716**

(43) Veröffentlichungstag der Anmeldung:
**01.04.1998 Patentblatt 1998/14**

(73) Patentinhaber: **PHOENIX AKTIENGESELLSCHAFT 21079 Hamburg (DE)**

(72) Erfinder:
• **SPITZ-VALENTINER, Mathias D-22761 Hamburg (DE)**
• **SCHRÖDER, Horst D-21377 Lüneburg (DE)**
• **BEUTH, Jürgen D-21079 Hamburg (DE)**
• **MEYER, Rüdiger D-21385 Amelinghausen (DE)**

(56) Entgegenhaltungen:
DE-U- 1 908 844          FR-A- 1 456 507
GB-A- 586 608          GB-A- 2 032 050

• **PATENT ABSTRACTS OF JAPAN vol. 007, no. 177 (M-233), 5.August 1983 & JP,A,58 078812 (NISSAN JIDOSHA KK), 12.Mai 1983,**

## Beschreibung

Diese Erfindung betrifft einen Anschlagpuffer, insbesondere Querpuffer, wiederum für Drehgestelle von luftgefederten Schienenfahrzeugen, umfassend einen rotationssymmetrischen Körper aus Gummi oder gummiähnlichem Kunststoff, bestehend wiederum aus einem Unterbau, von dem in Wirkungsrichtung der Kraft F, die der axialen Richtung des rotationssymmetrischen Körpers entspricht, sich ein Hohlraum in den Körper hinein erstreckt, sowie aus einem Oberbau mit der Gesamthöhe H, der von einer im wesentlichen ebenflächigen Stirnfläche sowie einer Außenkontur umrahmt ist, wobei die Außenkontur so gestaltet ist, daß zur Stirnfläche hin eine Durchmesserverringerung des Oberbaus auftritt; ferner ein Befestigungssystem aus Metall oder hochbelastbarem Kunststoff (z.B. Kunststoff auf Basis PPE; Warenzeichen "Vestoran" der Firma Hüls), bestehend wiederum aus einem Befestigungsflansch und einem Kontaktteil, das an dem Körper anvulkanisiert ist und dabei innerhalb des Seiten bereiches des Unterbaues angeordnet ist, wobei die axiale Erstreckung des Kontaktteiles die axiale Erstreckung des Unterbaues bestimmt; sowie eine Anschlagfläche, in deren Bereich der Hohlraum des Körpers seinen größten Durchmesser D besitzt. Die Außenkontur des Oberbaues ist dabei abgestuft gestaltet, und zwar unter Bildung eines oberen Seitenteiles mit der Höhe $H_1$ und einem Anstiegswinkel $\beta$ sowie eines unteren Seitenteiles mit der Höhe $H_2$ und einem Anstiegswinkel $\alpha$, wobei der Winkel $\beta$ größer ist als der Winkel $\alpha$, und zwar jeweils bezogen auf die Wirkungsrichtung der Kraft F. Ferner ist die Innenkontur des Hohlraumes so ausgelegt, daß bei einem Anstiegswinkel $\gamma$, und zwar bezogen auf die Anschlagfläche, eine maximale Hohlraumhöhe $H_3$ entsteht. Derartige Anschlagpuffer sind aus der GB-A-586 608 bekannt.

Bei Anschlagpuffern, insbesondere bei Queranschlägen in Drehgestellen von luftgefederten Schienenfahrzeugen, sind folgende Anforderungen wünschenswert. Der Kennlinienverlauf eines solchen Querpuffers sollte sich idealerweise aus einem möglichst langen, linearen Kennlinienverlauf mit einer niedrigen Federsteifigkeit und einem stark progressiven Kennlinienverlauf zusammensetzen. Der Übergangsbereich beider Teilkennlinien sollte möglichst klein gestaltet werden, wobei ein Knick in der Kennlinie optimal wäre. Der Querpuffer sollte große Einfederungen bei sehr kleinen Bauhöhen ermöglichen. Ein langer, linearer Kennlinienverlauf mit einer niedrigen Federsteifigkeit ist wünschenwert, um auftretende Anfangskräfte über einen längeren Einfederungsweg aufzunehmen, ohne daß der Queranschlag größere negative Auswirkungen auf den Komfort des Schienenfahrzeuges zur Folge hat. Der progressive Kenlinienverlauf wird zur Aufnahme der auftretenden Maximalkräfte benötigt.

Gummi ist ein elastischer, inkompressibler Werkstoff. Beim Verformen eines Druckpuffers kann das verdrängte Gummivolumen nur an den den Puffer begrenzenden Außenkonturen ausweichen, was eine Wirkflächenvergrößerung zur Folge hat. Die Steifigkeit eines Druckpuffers ist unter anderem eine Funktion der Wirkfläche. Bei einer Vergrößerung der Wirkfläche steigt die Steifigkeit des Druckpuffers an. Ein Druckpuffer hat deswegen einen natürlichen progressiven Kennlinienverlauf.

Im Hintergrund der oben genannten Aufgabenstellung zeichnet sich der gattungsgemäße Anschlagpuffer gemäß Kennzeichen des Anspruches 1 dadurch aus, daß die Höhe $H_3$ kleiner ist als die Höhe $H_1$ des oberen Seitenteiles.

In diesem Zusammenhang gelten zweckmäßigerweise folgende Parameter:

- $H_1 = (0{,}3 \text{ bis } 0{,}7) \times H$
  $H_2 = (0{,}7 \text{ bis } 0{,}3) \times H$

- $\alpha = 0$ bis $30°$, insbesondere 5 bis $30°$
  $\beta = 10$ bis $55°$
  $\gamma = 10$ bis $50°$

Ferner ist es von Vorteil, wenn insbesondere die Außenkontur des oberen Seitenteiles konkav ausgebildet ist.

Ebenso zweckmäßig ist es, die Innenkontur des Hohlraumes im Bereich der maximalen Hohlraumhöhe $H_3$ ebenfalls konkav auszubilden, wobei sich der Hohlraum vorteilhafterweise im wesentlichen über die gesamte Anschlagfläche erstreckt.

Die Erfindung wird nun anhand eines Ausführungsbeispieles unter Bezugnahme auf schematische Zeichnungen erläutert Es zeigen:

Fig. 1 den Querschnitt eines Querpuffers im unbelasteten Zustand;

Fig. 2 den Querschnitt eines Querpuffers im belasteten Zustand;

Fig. 3 ein Diagramm.

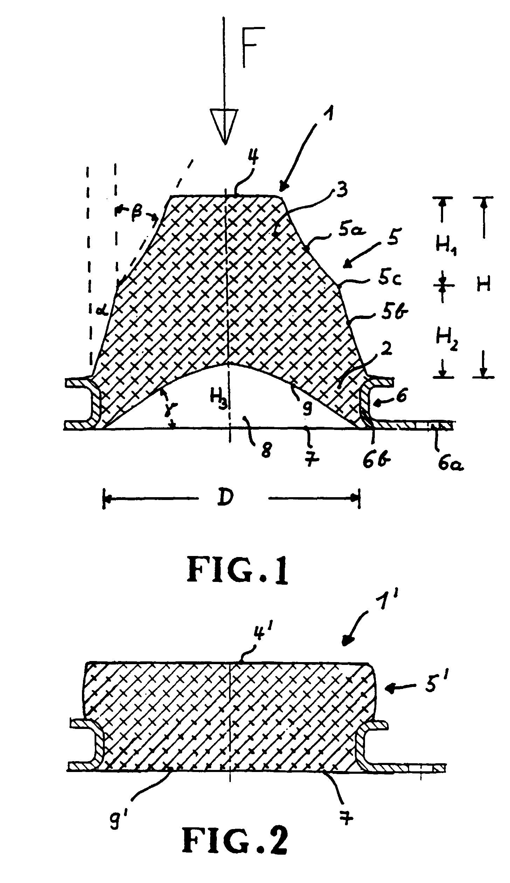

In Verbindung mit den Fig. 1 und 2 gilt dabei folgende Bezugsziffernliste:

1    Gummikörper
1'   Gummikörper
2    Unterbau
3    Oberbau mit der Gesamthöhe H
4    Stirnfläche (Kontaktfläche)
4'   Stirnfläche (Kontaktfläche)
5    Außenkontur
5a   oberes Seitenteil mit der Höhe $H_1$ und dem Anstiegswinkel $\beta$
5b   unteres Seitenteil mit der Höhe $H_2$ und dem Anstiegswinkel $\alpha$
5c   Absatz

5 Außenkontur
6 Befestigungssystem
6a Flansch
6b Kontaktteil zum Gummikörper
7 Anschlagfläche
8 Hohlraum in Wirkungsrichtung der Kraft F mit maximaler Höhe $H_3$
9 Innenkontur mit Anstiegswinkel $\gamma$
9' Auflagefläche (Innenkontur im belasteten Zustand)

Sämtliche in den Ansprüchen 1 bis 8 festgehaltenen konstruktiven Merkmale beziehen sich auf den unbelasteten Zustand.

Während der Pufferkörper aus Gummi oder gummiähnlichem Kunststoff rotationssymmetrisch ist. und zwar umfassend alle Bauteile (Unterbau, Oberbau, Stirnfläche, Außenkontur, Innenkontur des Hohlraumes), kann das Befestigungssystem, insbesondere im Flanschbereich asymmetrisch konstruiert sein.

In Verbindung mit den Fig. 1 bis 3 wird nun die Wrkungsweise bzw. der Kennlinienverlauf eines Querpuffers näher beschrieben.

Der Querpuffer gemäß Fig. 1 besitzt in Wirkungsrichtung der Kraft einen Hohlraum (8). Durch den Hohlraum hat der Querpuffer die Wirkungsweise eines in Reihe geschalteten Druck-Schub-Elementes. Ein auf Schub belastetes Element hat gegenüber einem auf Druck belasteten Element eine wesentlich geringere Steifigkeit und weist im allgemeinen keinen progressiven Kennlinienverlauf auf. Bei Einfederung des Querpuffers gemäß Fig. 2 wird deswegen der Oberbau (3) des Gummikörper (1, 1') in den unten liegenden Hohlraum verschoben, wobei sich die Außenkontur (5) des Puffers an der Kontaktfläche (4) anlegt. Dieser Vorgang hat eine stetige Vergrößerung der Kontaktfläche (4') zur Folge (Fig. 2), die jedoch keinen größeren Einfluß auf die Pufferkennlinie hat. Die Pufferkennlinie wird von der Schubsteifigkeit des in der Ebene des Hohlraumes verbleibenden Gummiquerschnittes bestimmt.

Durch die erfindungsgemäße Ausführung des Querpuffers wird ein langer linearer Kennlinienverlauf mit geringer Steifigkeit realisiert.

Die Innenkontur (9) des Hohlraumes (8) innerhalb des Unterbaues (2) ist so ausgelegt, daß die Gummikontur erst bei Erreichen des angestrebten Übergangspunktes vom linearen in den progressiven Bereich der Kennlinie, plötzlich und mit der gesamten Auflagefläche (9') gleichzeitig, mit der Anschlagfläche (7) in Kontakt tritt (Fig. 2). Der Kontakt erfolgt ohne vorherige Abrollkontakte, die zu einem Verschwimmen des Übergangsbereiches der beiden Kennlinienverläufe führen würde.

Durch das völlige Ausfüllen des Hohlraumes (8) wird das vorher in Reihe geschaltete Schubelement entkoppelt. Zusätzlich wird das im Unterbau (2) befindliche Gummivolumen gekammert und hat wegen der Inkompressibilität des Gummiwerkstoffes keinen Einfluß mehr auf das elastische Verhalten des Querpuffers. Die Gummikontur des Oberbaues (3) ist so gewählt daß der Vorgang des nicht steifigkeitserhöhenden Anlegens der Außenkontur (5) genau zu dem Zeitpunkt des Kennlinienüberganges abgeschlossen ist, an dem die Gummikontur im Hohlraum mit der Anschlagfläche (7) in Kontakt tritt (Fig. 2). Die Außenkontur (5') liegt zu diesem Zeitpunkt genau bis zu dem in der Höhe definierten, auf die Einfederung abgestimmten Absatz (5c), vollflächig an der oberen Kontaktfläche (4') an (Fig. 2). Das Ergebnis ist ein sprunghafter Steifigkeitsanstieg.

Nach dem Zeitpunkt des Kennliniensprunges verbleibt lediglich ein Druckelement mit einer relativ geringen Höhe, das bei weiterer Einfederung einen stark progressiven Kennlinienverlauf aufweist.

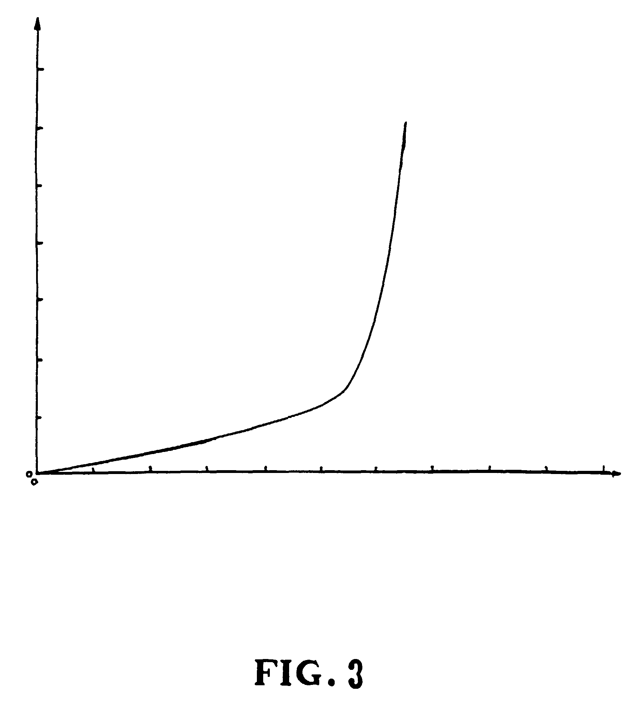

Das Diagramm nach Fig. 3 zeigt den oben beschriebenen Kennlinienverlauf, und zwar unter dem Gesichtspunkt des Weges L in mm (Abszisse) in Abhängigkeit der Kraft F in KN (Ordinate).

**Patentansprüche**

1. Anschlagpuffer insbesondere Querpuffer, insbesondere wiederum für Drehgestelle von luftgefederten Schienenfahrzeugen, umfassend

   - einen rotationssymmetrischen Körper (1) aus Gummi oder gummiähnlichem Kunststoff, bestehend wiederum aus

     - einem Unterbau (2), von dem in Wirkungsrichtung der Kraft F, die der axialen Richtung des rotationssymmetrischen Körpers (1) entspricht, sich ein Hohlraum (8) in den Körper (1) hinein erstreckt, sowie aus

     - einem Oberbau (3) mit der Gesamthöhe H, der von einer im wesentlichen ebenflächigen Stirnfläche (4) sowie einer Außenkontur (5) umrahmt ist, wobei die Außenkontur so gestaltet ist, daß zur Stirnfläche hin eine Durchmesserverringerung des Oberbaus auftritt; ferner

   - ein Befestigungssystem (6) aus Metall oder hochbelastbarem Kunststoff, bestehend wiederum aus einem Befestigungsflansch (6a) und einem Kontaktteil (6b), das an dem Körper anvulkanisiert ist und dabei innerhalb des Seitenbereiches des Unterbaues (2) angeordnet ist, wobei die axiale Erstreckung des Kontaktteiles (6b) die axiale Erstreckung des Unterbaues (2) bestimmt; sowie

   - eine Anschlagfläche (7), in deren Bereich der Hohlraum (8) des Körpers seinen größten Durchmesser D besitzt; wobei

- die Außenkontur (5) des Oberbaues abgestuft gestaltet ist (5c), und zwar unter Bildung eines oberen Seitenteiles (5a) mit der Höhe $H_1$ und einem Anstiegswinkel $\beta$ sowie eines unteren Seitenteiles (5b) mit der Höhe $H_2$ und einem Anstiegswinkel $\alpha$, wobei der Winkel $\beta$ größer ist als der Winkel $\alpha$, und zwar jeweils bezogen auf die Wirkungsrichtung der Kraft F; wobei ferner

- die Innenkontur (9) des Hohlraumes (8) so ausgelegt ist, daß bei einem Anstiegswinkel $\gamma$, und zwar bezogen auf die Anschlagfläche (7), eine maximale Hohlraumhöhe $H_3$ entsteht;

dadurch gekennzeichnet, daß

- die Höhe $H_3$ kleiner ist als die Höhe $H_1$ des oberen Seitenteiles (5a).

2. Anschlagpuffer nach Anspruch 1, dadurch gekennzeichnet, daß für die Höhe $H_1$ des oberen Seitenteiles (5a) und die Höhe $H_2$ des unteren Seitenteiles (5b) folgende Parameter gelten:

$$H_1 = (0,3 \text{ bis } 0,7) \text{ x } H$$

$$H_2 = (0,7 \text{ bis } 0,3) \text{ x } H$$

3. Anschlagpuffer nach Anspruch 1 oder 2, dadurch gekennzeichnet, daß der Winkel $\alpha$ des unteren Seitenteiles (5b) 0 bis 30°, insbesondere 5 bis 30°, beträgt.

4. Anschlagpuffer nach einem der Ansprüche 1 bis 3, dadurch gekennzeichnet, daß der Winkel $\beta$ des oberen Seitenteiles (5a) 10 bis 55° beträgt.

5. Anschlagpuffer nach einem der Ansprüche 1 bis 4, dadurch gekennzeichnet, daß der Winkel $\gamma$ des Hohlraumes (8) 10 bis 50° beträgt.

6. Anschlagpuffer nach einem der Ansprüche 1 bis 5, dadurch gekennzeichnet, daß die Außenkontur der Seitenteile (5a, 5b), insbesondere die Außenkontur des oberen Seitenteiles (5a), konkav ausgebildet ist.

7. Anschlagpuffer nach einem der Ansprüche 1 bis 6, dadurch gekennzeichnet, daß die Innenkontur (9) des Hohlraumes (8) im Bereich der maximalen Hohlraumhöhe $H_3$ konkav ausgebildet ist.

8. Anschlagpuffer nach einem der Ansprüche 1 bis 7, dadurch gekennzeichnet, daß sich der Hohlraum (8) im wesentlichen über die gesamte Anschlagfläche (7) erstreckt.

## Claims

1. A stop buffer, especially a cross-buffer which is intended especially for bogies of pneumatically-sprung rail vehicles and comprises

- an axially symmetrical body (1) of rubber or rubberlike plastics, which in turn consists of

  - a base (2) from which a cavity (8) extends into the body (1) in the direction of action of the force F, which corresponds with the axial direction of the axially symmetrical body (1); as well as of
  - a superstructure (3) of total height H, framed by an essentially plane endface (4) as well as an outer contour (5), the outer contour being so shaped that there is a reduction in diameter of the superstructure towards the endface; and again

- a fixing system (6) of metal or high-duty plastics, which in turn consists of a fixing flange (6a) and a contact part (6b) vulcanized onto the body and moreover arranged inside the side region of the base (2), the axial extent of the contact part (6b) determining the axial extent of the base (2); as well as a stopface (7) in the region of which the cavity (8) in the body has its greatest diameter D;
- the outer contour (5) of the superstructure being stepped (5c), that is, to form an upper sidepart (5a) of height $H_1$ and gradient $\beta$ as well as a lower sidepart (5b) of height $H_2$ and gradient $\alpha$, the angle $\beta$ being greater than the angle $\alpha$, referred respectively, that is, to the direction of action of the force F; and again
- the inner contour (9) of the cavity (8) being so shaped that at a gradient $\gamma$ referred, that is, to the stopface (7), a maximum height $H_3$ of the cavity arises,

characterized in that

- the height $H_3$ is less than the height $H_1$ of the upper sidepart (5a).

2. A stop buffer as in Claim 1, characterized in that for the height $H_1$ of the upper sidepart (5a) and the height $H_2$ of the lower sidepart (5b) the following parameters apply:

$$H_1 = (0.3 \text{ to } 0.7) \times H$$

$$H_2 = (0.7 \text{ to } 0.3) \times H.$$

3. A stop buffer as in Claim 1 or 2, characterized in that the angle $\alpha$ of the lower sidepart (5b) amounts to 0 to 30°, especially 5 to 30°.

4. A stop buffer as in one of the Claims 1 to 3, characterized in that the angle $\beta$ of the upper sidepart (5a) amounts to 10 to 55°.

5. A stop buffer as in one of the Claims 1 to 4, characterized in that the angle $\gamma$ of the cavity (8) amounts to 10 to 50°.

6. A stop buffer as in one of the Claims 1 to 5, characterized in that outer contour of the sideparts (5a, 5b), especially the outer contour of the upper sidepart (5a), is made concave.

7. A stop buffer as in one of the Claims 1 to 6, characterized in that in the region of the maximum height $H_3$ of the cavity (8) the inner contour (9) of the cavity is made concave.

8. A stop buffer as in one of the Claims 1 to 7, characterized in that the cavity (8) extends over essentially the whole stopface (7).

## Revendications

1. Butée élastique, en particulier transversale, plus particulièrement destinée aux bogies de véhicules ferroviaires à amortissement pneumatique, comprenant :

   - un élément symétrique en rotation (1) composé de caoutchouc ou d'un matériau analogue, et formé :

     - d'une structure inférieure (2) à partir de laquelle un évidement (8) s'étend vers l'intérieur de l'élément (1) dans le sens d'application de la force F, qui correspond au sens axial de l'élément symétrique en rotation (1),
     - ainsi que d'une structure supérieure (3) d'une hauteur totale H, qui est entourée par une face frontale (4) sensiblement plane et un contour extérieur (5), ce dernier étant conformé de telle sorte que le diamètre de la structure supérieure diminue en direction la face frontale,

   - et comprenant aussi un système de fixation (6) fait de métal ou d'un plastique très résistant aux contraintes, composé d'une bride de fixation (6a) et d'une partie de contact (6b), qui est fixé sur l'élément par vulcanisation et disposé à l'intérieur de la partie latérale de la structure inférieure (2), l'étendue axiale de la partie de contact (6b) déterminant celle de la structure inférieure (2),

   - ainsi qu'une surface de butée (7) au niveau de laquelle l'évidement (8) de l'élément présente son plus grand diamètre D ;

dans laquelle le contour extérieur (5) de la structure supérieure est conformé en gradins (5c), avec une partie latérale supérieure (5a) ayant une hauteur $H_1$ et un angle de pente $\beta$ ainsi qu'une partie latérale inférieure (5b) ayant une hauteur $H_2$ et un angle de pente $\alpha$, l'angle $\beta$ étant plus grand que l'angle $\alpha$ par rapport au sens d'application de la force F ;
dans laquelle le contour intérieur (9) de l'évidement (8) est en outre conçu de telle sorte qu'avec un angle de pente $\gamma$ par rapport à la surface de butée (7), on obtient une hauteur maximale de l'évidement $H_3$, caractérisée en ce que la hauteur $H_3$ est inférieure à la hauteur $H_1$ de la partie latérale supérieure (5a).

2. Butée élastique selon la revendication 1, caractérisée en ce que les paramètres suivants s'appliquent à la hauteur $H_1$ de la partie latérale supérieure (5a) et à la hauteur $H_2$ de la partie latérale inférieure (5b) :

$$H_1 = (0{,}3 \text{ à } 0{,}7) \times H$$

$$H_2 = (0{,}7 \text{ à } 0{,}3) \times H$$

3. Butée élastique selon la revendication 1 ou 2, caractérisée en ce que l'angle $\alpha$ de la partie latérale inférieure (5b) est de 0 à 30°, en particulier de 5 à 30°.

4. Butée élastique selon l'une quelconque des revendications 1 à 3, caractérisée en ce que l'angle $\beta$ de la partie latérale supérieure (5a) est de 10 à 55°.

5. Butée élastique selon l'une quelconque des revendications 1 à 4, caractérisée en ce que l'angle $\gamma$ de l'évidement (8) est de 10 à 50°.

6. Butée élastique selon l'une quelconque des revendications 1 à 5, caractérisée en ce que le contour extérieur des parties latérales (5a, 5b), et en particulier le contour extérieur de la partie latérale supérieure (5a), est de forme concave.

7. Butée élastique selon l'une quelconque des revendications 1 à 6, caractérisée en ce que le contour intérieur (9) de l'évidement (8) est de forme concave au niveau de la hauteur maximale de l'évidement $H_3$.

8. Butée élastique selon l'une quelconque des revendications 1 à 7, caractérisée en ce que l'évidement (8) s'étend sensiblement sur toute la surface de butée (7).

FIG.1

FIG.2

**FIG. 3**